# EUROPEAN PATENT SPECIFICATION

(11) **EP 0 344 130 B1**
(45) Date of publication and mention of the grant of the patent: **24.03.1993**
(21) Application number: 89830221.1
(22) Date of filing: 17.05.1989
(51) Int. Cl.: A47B 96/06, A47B 47/02, A47F 5/13, F16B 12/50

(54) **A system for making modular furniture pieces**
System zur Konstruktion modularer Möbelstücke
Système de construction de meubles modulaires

(30) Priority: 27.05.1988 IT 2131488 U
(43) Date of publication of application: 29.11.1989
(73) Proprietor: DOMESTIK S.R.L., I-22049 Valmadrera (Como) (IT)
(72) Inventor: Brioni, Gianfranco, I-22049 Valmadrera (Como) (IT)
(74) Representative: Cicogna, Franco

(56) References cited:
- EP-A- 0 071 532
- FR-A- 1 276 390
- FR-A- 1 335 491
- GB-A- 2 163 639
- LU-A- 42 147
- US-A- 3 007 708

## Description

### BACKGROUND OF THE INVENTION

The present invention relates to a system which has been specifically designed for making modular furniture articles,comprising bearing walls made of an electrically welded net preferably provided with flat tube edges.

As is known,modular furniture articles are presently available which are sold in a disassenbled condition,for assembling by the user.

These furniture articles,however,are affected by some drawbacks the main of which is that they are difficult to assemble,since for the assembling there are required special tools and experience.

Moreover,the modular elements forming the furniture article are rather difficult to be mounted by a not skilled user.

In addition to the foregoing it should be further added that these modular elements are rather expensive, since they must be necessarily subjected to complex treatment operations and to their cost the additional tool cost should be added.

The document US-A-3 007 708 discloses a system for making modular furniture articles having substantially the features of the preamble of the main claim.

### SUMMARY OF THE INVENTION

Thus,the task of the present invention is to overcome the above mentioned drawbacks by providing a system for making modular furniture articles which comprises component modular elements which are very simple construction wise and have a comparatively low cost.

Within the scope of this aim,a main object of the present invention is to provide such a system which comprises modular elements made of an electrically welded net.

Yet another object of the present invention is to provide such a system the single component elements of which can be constructed in a very simple and quick way without the need of using expensive molds and tools.

Yet another object of the invention is to provide such a system the component elements of which can be easily assembled so as to provide several different types of furniture articles,such as base furniture pieces,suspended furniture pieces,and carriage furniture pieces.

Yet another object of the invention is to provide such a modular system the single component elements of which can be easily transported and stored in a very reduced space.

Other particular embodiments of the invention are set out in claims 2-6.

### BRIEF DESCRIPTION OF THE DRAWINGS

These and other characteristics of the invention will become more apparent from the following detailed description of some preferred embodiments of the subject system,with reference to the accompanying drawings,in which:

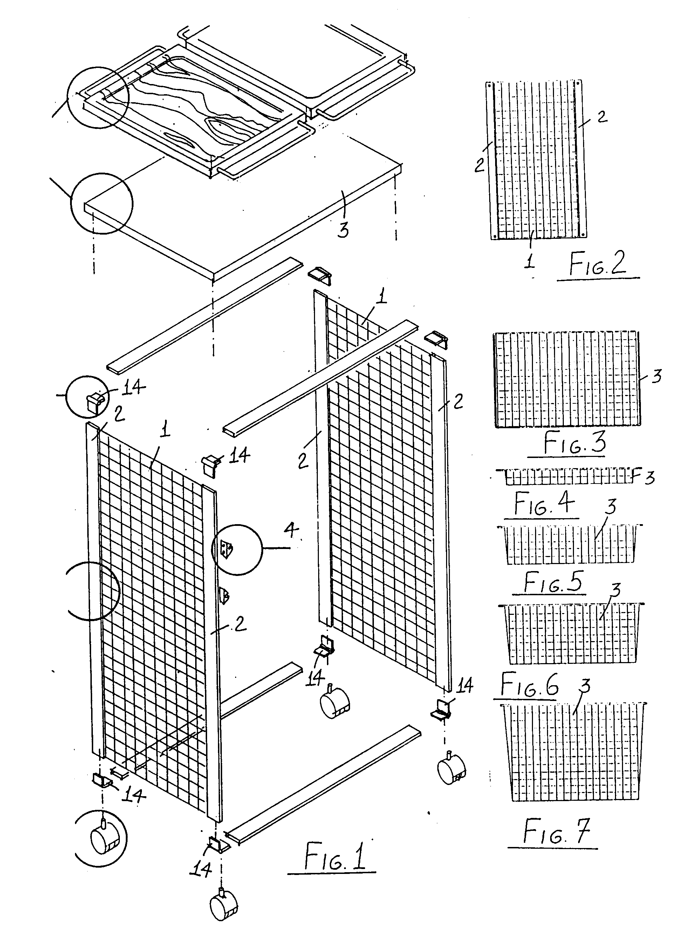

figure 1 is an exploded perspective view of a carriage comprising two bearing walls,cross members for coupling these walls,a plurality of two-way angle coupling elements and a shelf for possibly supporting trays including specifically designed handle members;

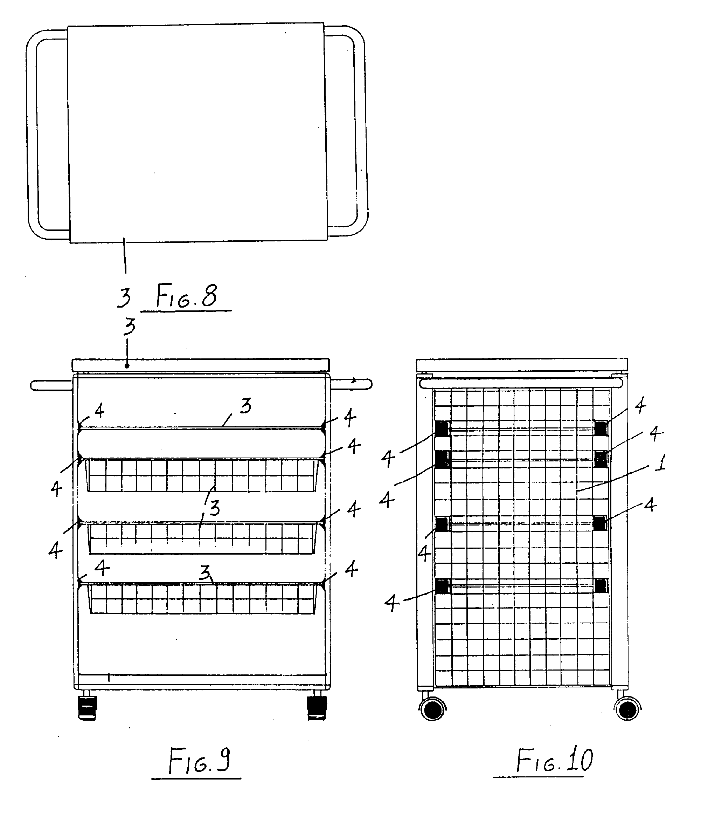

figures 2,3,4,5,6 and 7 respectively show one of the bearing walls,as well as a plurality of basket members,respectively shown by top and side views;
figures 8,9 and 10 respectively show a top plan view and two side views of a transportable carriage comprising a plurality of shelves or bearing panels which can be arranged at several desired positions;
figures 11 and 12 show bearing walls supporting different shape shelves,jointly with a plurality of hook members to be used for supporting towels,cloth articles and the like;

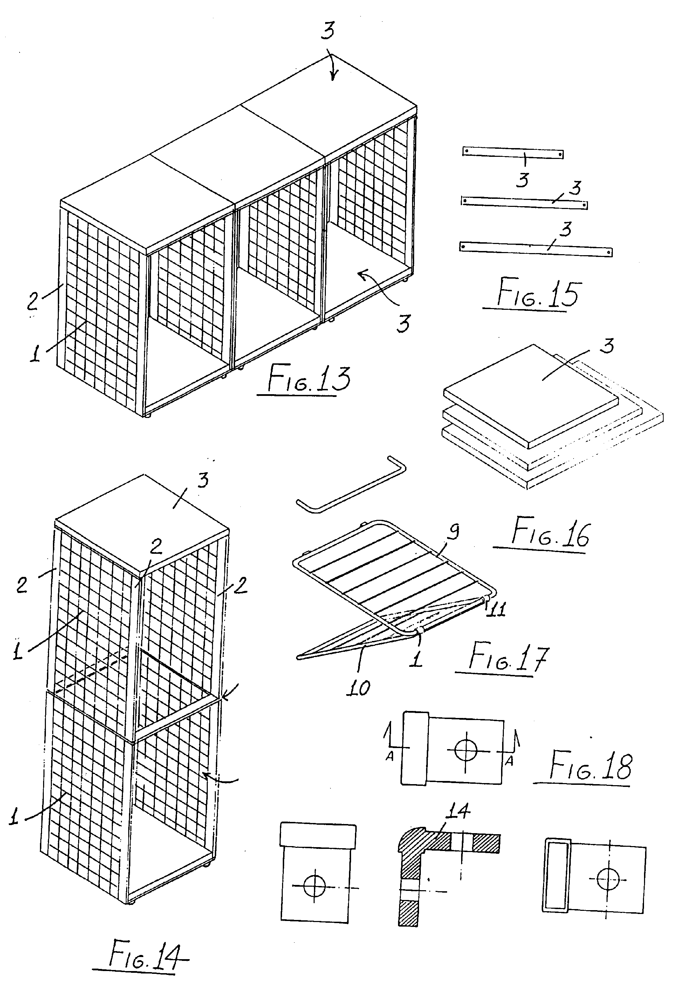

figures 13 and 14 show two different furniture pieces made by the modular system according to the present invention;
figure 15 schematically shows spacer elements included in the modular system according to the invention;
figure 16 shows a plurality of shelf members included in the modular system according to the invention;
figure 17 schematically shows a further shelf member which can be used in several types of different furniture pieces;
figure 18 schematically shows several two-way coupling element which can be differently coupled to one another;

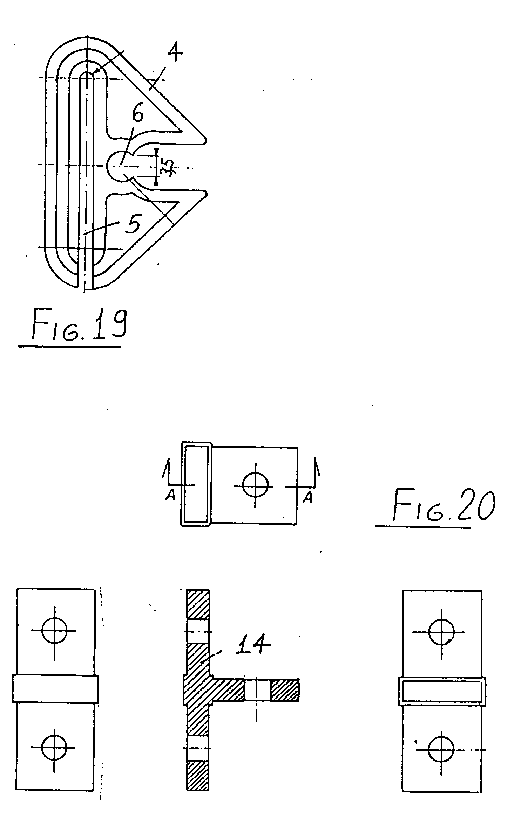

figure 19 shows a supporting element adapted for application to walls or bearing frames,made of electrically welded net and provided for supporting panels,shelves,baskets and other elements included in the system according to the invention;
figure 20 shows three-way coupling elements which can be used for mutually coupling several vertically and horizontally arranged component elements.

### DESCRIPTION OF THE PREFERRED EMBODIMENTS

With reference to the figures of the accompanying drawings,the system for making modular furniture articles according to the present invention,essentially comprises bearing walls or supporting elements 1,made of an electrically welded net,preferably including flat tube edges 2.

These walls,which may have any suitable size and shape,are adapted to support a plurality of panels, shelves,basket members and the like,indicated overally at the reference number 3.

These elements 3 can also be made of an electrically welded net;alternatively they can be made of wood material,glass or any other suitable materials,suitably veneered or coated by plastic laminates or other suitable covering materials.

The subject system further comprises shelves consisting of electrically welded net basket members 3 having a given depth and accordingly a variable holding capability.

These basket members 3, together with the panels and shelves,are supported by the electrically welded bearing or supporting walls through a plurality of supporting members 4.

More specifically,said supporting members 4 are made of a plastic material and are provided with respective vertical housing seats or hollows 5 for engaging with wire elements forming the electrically welded net.

The above mentioned supporting elements are moreover provided with a respective side seat for housing and locking end portions of said shelves and basket members,which are snap engaged in a round seat 6.

The supporting members 4,moreover, operate to support the shelves 7 and supporting elements therefor,which shelves consist of round cross-section wire portions 8 so bent as to define substantially rectangular perimetrical frames.

The subject system comprises moreover different shape net shelves having any desired size coupled to one another by means of coupling strips 11 and defining flat surfaces 9 and supporting elements 10.

In this connection, it should be pointed out that the elements stabilizing the bearing or supporting walls 1 and top and bottom shelves of the modular furniture articles consist of two or three-way coupling elements 14,to be engaged into one another so as to properly connect the uprights and cross members forming the furniture article.

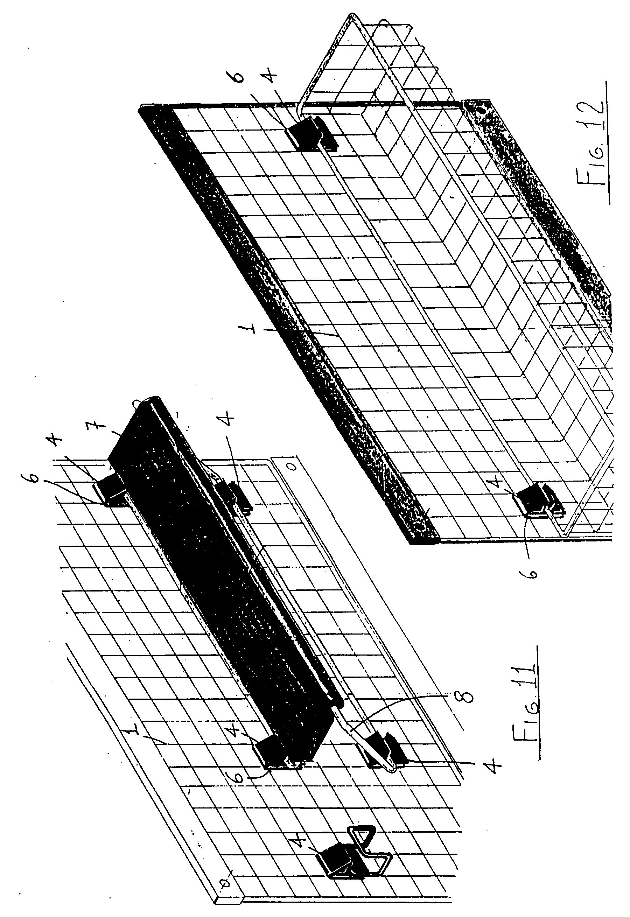

Figures 11 and 12 show vertical supporting elements,also made of electrically welded net,which support shelves in turn further stabilized by means of round cross-section wire portions,which are so bent as to define substantially rectangular perimetrical frames.

Figures 11 and 12 show the two above mentioned supporting elements which support hook elements made of bent metal round cross section wire portions.

As is shown,the subject system affords the possibility of making both hanging base elements and wheeled carriages.

While the invention has been disclosed and illustrated with reference to some preferred embodiments thereof, the modular system according to the invention may also comprise four-way coupling elements to provide simultaneous vertical and horizontal coupling capability.

## Claims

1. A system for making modular furniture articles, comprising welded net supporting walls (1), including a flat tube edge (2) and provided with supporting members for supporting shelves (7) and baskets (3), characterized in that said walls (1) are adapted to operate as supporting elements in cooperation with supporting members (4) made of plastic material which are provided with a respective vertical hollow (5) to be engaged by the wires of said electrically welded net.

2. A system according to Claim 1, characterized in that said supporting members (4) are laterally each provided with a seat for engaging with and locking an end portion of said shelves.

3. A system according to Claim 1, characterized in that said supporting members (4) are adapted to support said shelves (7) and shelf supporting elements consisting of round cross-section wire portions (8) so bent as to define substantially rectangular perimetrical frames.

4. A system according to Claim 1, characterized in that said system comprises variable holding capability baskets (3).

5. A system according to Claim 4, characterized in that said baskets (3) and shelves (7) are supported by said walls (1) through a plurality of plastic material supporting members (4).

6. A system according to Claim 1, characterized in that said system comprises T and L shape male and female coupling elements (11, 14) for coupling uprights, cross-members or panels.

## Patentansprüche

1. System zur Konstruktion modularer Möbelstücke mit geschweissten Netzlagenwände (1), die eine flache röhrförmige Kante (2) weist auf und mit Stützelementen zum stützen von Gestelle (7) und Körber (3) versehen ist, dadurch gekennzeichnet, dass die obengenannten Wände (1) zum Wirken als Stützelemente zusammen mit Lagerelementen (4) aus Kunststoff geeignet sind, die mit einer entsprechenden senkrechten Bohrung (5) zum Anbringen durch den Drähte des obengenannten elektrisch geschweissten Netzes versehen ist.

2. System nach Anspruch 1, dadurch gekennzeichnet, dass die obengenannten Lagerelementen (4) mit einem Sitz zur Anbringung mit der und zum Einspannen die Endportion der obengenannten Gestellen seitlich versehe sind.

3. System nach Anspruch 1, dadurch gekennzeichnet, dass die obengenannten Lagerelementen (4) zum Lagern der obengenannten Gestelle (7) und der Gestellagerelementen geeignet sind, die aus Drahtportionen (8) kreisförmiges Durchschnittes bestehen, die so gebogen sind, um wesentlich rechteckigen Umlaufrahmen zu bestimmen.

4. System nach Anspruch 1, dadurch gekennzeichnet, dass das obengenannte System solchen Körber (3) weist auf die einen veränderliche Rauminhalt besitzen.

5. System nach Anspruch 4, dadurch gekennzeichnet, dass die obengenannten Gestellen (7) und Körber (3) mittels den obengenannten Wände (1) durch mehreren Lagerelementen (4) aus Kuststoff gestützt werden.

6. System nach Anspruch 1, dadurch gekennzeichnet, dass das obengenannte System mit F- und L-förmigen Nut- und Federverbindungselementen (11, 14) zum Verbinden Ständern, Querelementen oder Tafeln versehen ist.

## Revendications

1. Système de construction de meubles modulaires, comprenant des parois de support (1) en forme de réseau saudé, présentant un bord tubulaire (2) plat et muni d'éléments de support pour consoles (7) et paniers (3), caractérisé en ce que lesdites parois (1) sont adaptées pour faire fonction d'éléments de support en coopération avec des pièces de support (4) qui sont faites d'un mantériel plastique et qui sont munies d'une cavité verticale (5) respective à être engagée par les fils dudit réseau saudé electriques.

2. Système selon la revendication 1, caractérisé en ce que lesdites pièces de support (4) sont munies latéralement chacune d'un siège pour y engager et pour serrer une poriton terminale desdites consoles.

3. Système selon la revendication 1, caractérisé en ce que lesdites pièces de support (4) sont adaptées à supporter lesdites consoles (7) aussi que des éléments de supports pour console, consistant dans des portions de fil (8) dont la section transversale est circulaire, lesdites portions étant courbées de façon de définir des cadres périmétrals essentiellement rectangulaires.

4. Système selon la revendication 1, caractérisé en ce que ledit système comprend des paniers dont la capacité est variable.

5. Système selon la revendication 4, caractérisé en ce que lesdits paniers (3) et lesdites consoles (7) sont supportés par lesdites parois (1) au moyen de plusieurs pièces de support (4) faites d'un matériel plastique.

6. Système selon la revendication 1, caractérisé en ce que ledit système comprend des éléments d'accouplement mâle et femelle (11, 14) en forme de T et de L, pour accoupler des montants ou éléments verticaux, des éléments transversaux ou des panneaux.
